Europäisches Patentamt

European Patent Office

Office européen des brevets

(19)

(11) **EP 1 232 471 B1**

(12) **FASCICULE DE BREVET EUROPEEN**

(45) Date de publication et mention
de la délivrance du brevet:
**18.02.2004 Bulletin 2004/08**

(21) Numéro de dépôt: **00951622.0**

(22) Date de dépôt: **21.06.2000**

(51) Int Cl.⁷: **G06K 7/08**

(86) Numéro de dépôt international:
**PCT/FR2000/001704**

(87) Numéro de publication internationale:
**WO 2001/001326 (04.01.2001 Gazette 2001/01)**

(54) **PROCEDE D'IDENTIFICATION D'ETIQUETTES ELECTRONIQUES PAR RONDES ADAPTATIVES**

VERFAHREN ZUR IDENTIFIKATION ELEKTRONISCHEN ETIKETTEN MIT ADAPTIVEN RUNDEN

METHOD FOR IDENTIFYING ELECTRONIC LABELS BY ADAPTIVE ROUNDS

(84) Etats contractants désignés:
**AT BE CH CY DE DK ES FI FR GB GR IE IT LI LU
MC NL PT SE**

(30) Priorité: **25.06.1999 FR 9908181**

(43) Date de publication de la demande:
**21.08.2002 Bulletin 2002/34**

(73) Titulaire: **Tagsys
13600 La Ciotat (FR)**

(72) Inventeur: **KALINOWSKI, Richard
F-13470 Carnoux-en-Provence (FR)**

(74) Mandataire: **Breese, Pierre et al
3, avenue de l'Opéra
75001 Paris (FR)**

(56) Documents cités:
**WO-A-98/52142          WO-A-99/12122
US-A- 5 686 902          US-A- 5 883 582**

## Description

L'invention concerne le domaine des étiquettes électroniques qui sont apposées sur des produits pour les identifier selon leurs attributs et, plus particulièrement, un procédé pour identifier les étiquettes électroniques d'un ensemble en fonction de leur nombre estimé.

Il est connu d'utiliser des codes "barre" qui sont imprimés sur les produits pour les identifier et qui sont lus par un dispositif optique lors de leur passage à la caisse du magasin de vente. Le code barre qui est lu permet d'interroger un dispositif informatique qui fournit, par exemple, le prix du produit.

Ces codes barre présentent certaines limitations qui sont dues essentiellement au fait qu'ils sont figés lors de leur impression et ne peuvent donc pas être modifiés au cours de la vie du produit.

Aussi, il est maintenant proposé de remplacer les codes barre par des étiquettes dites électroniques qui contiennent des circuits électroniques tels qu'une mémoire capable d'enregistrer un code binaire à n bits. Ce code binaire est représentatif du code barre, notamment pour indiquer le type de produit, mais peut aussi représenter d'autres informations ou attributs susceptibles d'être modifiés au cours de la vie du produit en supposant, bien entendu, que la mémoire est réinscriptible pour au moins certaines parties du code binaire à n chiffres. Il peut en être ainsi de la date de vente, de l'identification du magasin de vente, de la durée de la garantie, de la date de fin de garantie, etc.

Le dispositif d'interrogation/lecture/enregistrement peut fonctionner à la manière d'un dispositif de lecture de codes barre, c'est-à-dire qu'il ne dialogue qu'avec une seule étiquette électronique à la fois, celle qui lui est présentée dans son volume de rayonnement.

Cependant, le dispositif d'interrogation/lecture/enregistrement est susceptible d'interroger simultanément toutes les étiquettes électroniques situées dans son volume de rayonnement de sorte que ces dernières répondent aussi simultanément et ne peuvent donc pas être identifiées une à une.

Pour résoudre ce problème, il a été proposé d'interroger les étiquettes électroniques selon différents procédés dits d'anti-collisions qui permettent de "gérer" les étiquettes qui répondent simultanément et qui sont donc en "collision".

Ces procédés d'anti-collisions sont partagés en deux classes : déterministes et non-déterministes.

Dans la première classe, une première manière de faire est d'interroger les étiquettes électroniques sur la base, par exemple, de . tout ou partie du code d'identification du produit jusqu'à ce qu'une seule étiquette réponde à ce code ou partie de code. Cette première manière peut conduire à un nombre élevé d'interrogations sachant que pour un code à n=64 bits il y a plus de $10^{19}$ possibilités.

Une deuxième manière de faire consiste à faire répéter au dispositif d'interrogation/lecture/enregistrement ce qu'il reçoit des étiquettes électroniques et ceci bit à bit ou bloc de bits par bloc de bits. Les étiquettes électroniques qui reconnaissent le bit ou le bloc de bits répété savent qu'elles ont été prises en compte par le dispositif d'interrogation et continuent seules à émettre un autre bit ou bloc de bits. Ces opérations sont répétées jusqu'à la sélection d'une seule étiquette électronique.

Les procédés déterministes présument qu'il n'existe pas deux étiquettes électroniques ayant le même code d'identification, ce qui constitue une contrainte importante dans le cas où il y a un nombre élevé de produits du même type, par exemple dans un supermarché, car chaque article doit être étiqueté différemment pour être reconnu.

En outre, ces procédés déterministes n'identifient que les étiquettes électroniques qui sont présentes au début de la mise en oeuvre du procédé pour un ensemble donné.

Toute nouvelle étiquette par rapport à cet ensemble ne peut être prise en compte et doit attendre le cycle suivant du procédé d'identification. Il en résulte que ces procédés déterministes ne sont pas applicables directement à une identification en continu de produits, par exemple ceux défilant sur un tapis roulant.

L'art antérieur connaît déjà Le brevet américain N°US 5686902. Ce brevet décrit un procédé d'identification d'étiquettes électroniques apposées sur des produits à l'aide d'un dispositif électronique d'interrogation/lecture/enregistrement, les étiquettes électroniques et le dispositif électronique étant capables chacun de recevoir et d'émettre des messages, les étapes de ce procédé consistant à :

- indiquer aux étiquettes électroniques le nombre de fenêtres de durée d'émission consécutives d'un premier cycle ou ronde,
- comptabiliser, pendant le cycle de fenêtres, les messages reçus des étiquettes électroniques pour déterminer le nombre ni d'identifications, le nombre n, de fenêtres ou cases vides et le nombre de collisions,
- arrêter le procédé si $n_c = 0$, ou passer à l'étape suivante si $n_c \neq 0$,
- calculer un nombre de fenêtres d'émission pour le cycle suivant en fonction des valeurs de $N_s$, $n_i$, $n_v$ et $n_c$.

Dans les procédés non déterministes, les étiquettes électroniques sont prévues pour émettre un message après un intervalle de temps de durée aléatoire compté à partir d'un point de départ donné par le dispositif d'interrogation/lecture/enregistrement. L'étiquette électronique considérera que son message a été reconnu si elle reçoit un accusé-réception du dispositif d'interrogation/lecture/enregistrement. En l'absence d'un accusé-réception, l'étiquette électronique non reconnue envoie son message lors du cycle suivant d'interrogation après l'écoulement d'un nouvel intervalle de temps de durée aléatoire.

Dans un tel procédé non-déterministe, il est probable que plusieurs étiquettes électroniques émettent simultanément si leur nombre total est nettement plus grand que le nombre de durées aléatoires prévues dans un cycle, ce qui brouille le message de l'étiquette électronique qui a émis en premier.

Aussi, il a été proposé de faire taire les étiquettes électroniques dès la détection d'une émission d'une autre, détection qui peut être faite par les étiquettes électroniques elles-mêmes ou par le dispositif d'interrogation/lecture/enregistrement.

Les performances des procédés non-déterministes sont déterminées par le nombre maximum NsMAX de fenêtres de durée d'émission pendant un cycle par rapport au nombre N d'étiquettes électroniques, ce nombre NsMAX définissant aussi le nombre d'attentes aléatoires possibles. Ainsi, dans le cas de N étiquettes électroniques, le procédé est optimal pour une valeur Ns1 de NsMAX mais dans le cas de 2N étiquettes électroniques, le procédé est optimal pour une valeur 2Ns1 de NsMAX. Ceci a pour conséquence que le procédé n'est pas adapté à un nombre quelconque d'étiquettes électroniques.

Par ailleurs, il n'est pas possible de détecter à coup sûr deux étiquettes électroniques qui émettent exactement au même moment. Ceci peut donner lieu à des situations où une étiquette électronique se croit identifiée par l'accusé-réception alors que ce dernier était destiné à une autre étiquette électronique.

Un but de la présente invention est donc de mettre en oeuvre un procédé du type non-déterministe d'identification d'étiquettes électroniques apposées sur des produits qui permet d'identifier très rapidement les étiquettes électroniques d'un ensemble quels que soient leur nombre et leur identifiant.

Ce but est atteint en adaptant le nombre d'attentes aléatoires ou de fenêtres d'émission au nombre d'étiquettes électroniques restant à identifier. Cette adaptation est réalisée par le dispositif d'interrogation/lecture/enregistrement en fonction des résultats d'identification du cycle précédent.

L'invention concerne un procédé d'identification d'étiquettes électroniques tel que défini dans la revendication 1.

Dans chaque étiquette électronique, le procédé comprend, en outre, les étapes suivantes consistant à :

(m) réceptionner le nombre Ns de fenêtres à chaque cycle ou ronde,
(n) choisir aléatoirement une fenêtre d'émission parmi Ns,
(o) émettre un message pendant la durée de la fenêtre choisie,
(p) attendre un message en provenance du dispositif d'interrogation/lecture/enregistrement,
(q) réceptionner l'accusé-réception du message émis du dispositif d'interrogation/lecture/enregistrement en l'absence de collision,
(r) retourner à l'étape (m) en cas de défaut d'accusé-réception, c'est-à-dire en cas de collision ou de fenêtre vide.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma fonctionnel d'une étiquette électronique sans contact et d'un dispositif d'interrogation/lecture/enregistrement d'une telle étiquette électronique auxquels s'applique le procédé selon l'invention,

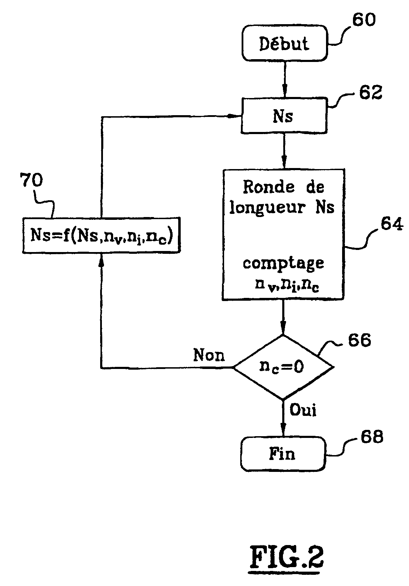

- la figure 2 est un diagramme montrant les différentes étapes du procédé selon l'invention,
- la figure 3 est un diagramme montrant le déroulement du procédé dans le cas de cent étiquettes électroniques.

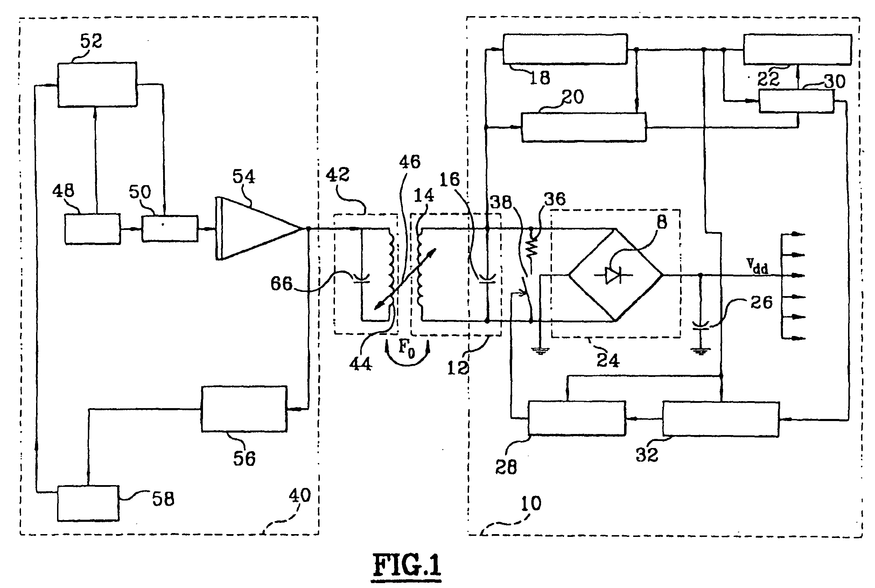

Une étiquette électronique sans contact 10 comprend par exemple (figure 1), une antenne 12 constituée d'un circuit accordé qui comprend un enroulement d'induction 14 et un condensateur 16. La fréquence d'accord $F_0$ de l'antenne 12 est par exemple de 13,56 Mégahertz.

Ce circuit accordé de l'antenne est connecté à différents circuits qui réalisent chacun une fonction particulière. Ainsi, un circuit 24 réalise la fonction de redressement double alternance du signal aux bornes du circuit accordé, par exemple, par un pont à diodes 8. Ce circuit de redressement 24 est suivi d'un condensateur de filtrage 26 du signal redressé qui fournit la tension d'alimentation $V_{dd}$ de tous les autres circuits de l'étiquette électronique, notamment ceux représentés dans le rectangle 10 de la figure 1.

Un circuit 18 réalise la fonction dite Horloge et la synchronisation de cette dernière à partir de la fréquence $F_0$. Les signaux à différentes fréquences fournis par ce circuit Horloge 18 sont appliqués aux autres circuits de l'étiquette représentés ou non sauf à l'antenne 12 et au circuit de redressement 24.

Le circuit 20 réalise la fonction de démodulation et de décodage des signaux qui modulent le signal à la fréquence porteuse $F_0$, signaux qui constituent l'information reçue par l'étiquette.

Les informations relatives au produit auquel l'étiquette est associée sont enregistrées dans une mémoire 22 qui est adressable par un circuit d'enregistrement/lecture 30.

Ce circuit d'enregistrement/lecture 30 est sous le contrôle des signaux détectés et décodés par le circuit 20 et fournit des signaux qui sont appliqués à un circuit de synthèse des messages 32.

Les messages fournis par le circuit de synthèse 32 sont appliqués à un circuit de modulation de charge d'antenne qui a été représenté schématiquement par un circuit 28 et par un interrupteur 38 commandé par le circuit 28. Une résistance de charge 36 a été représentée en série avec l'interrupteur 38.

Le dispositif d'interrogation/lecture/écriture de l'étiquette 10 comprend par exemple de manière connue une antenne 42 constituée d'un circuit accordé qui comprend un enroulement d'induction 44 et un condensateur 66, la fréquence d'accord étant $F_0$. Les deux antennes 12 et 42 sont couplées magnétiquement comme cela est représenté par la flèche 46.

L'antenne 42 est alimentée par des signaux électriques à la fréquence porteuse $F_0$ qui sont modulés par des signaux numériques basse fréquence véhiculant l'information à transmettre à l'étiquette 10. Ces signaux électriques modulés sont élaborés par un modulateur 50 qui reçoit, d'une part, un signal à la fréquence $F_0$ d'un oscillateur 48 et les signaux de modulation d'un générateur de messages 52. Les signaux de sortie du modulateur 50 sont appliqués à un amplificateur de puissance 54 dont la borne de sortie est directement connectée à l'antenne 42.

Les signaux reçus par l'antenne 42 sont appliqués à un circuit de réception 56 qui réalise leur détection, démodulation et décodage. Les signaux décodés sont appliqués à un microprocesseur 58 qui les interprète et fournit les signaux de commande du générateur de messages 52.

Le procédé selon l'invention sera décrit en relation avec un ensemble comprenant des étiquettes électroniques du type de celles décrites à l'aide de la figure 1 et un dispositif d'interrogation également décrit à l'aide de la figure 1.

Après un début (rectangle 60), le procédé comprend les étapes suivantes consistant à :

(a) indiquer aux étiquettes électroniques le nombre Ns de fenêtres ou créneaux d'émission consécutives d'un premier cycle ou ronde (rectangle 62),

(b) comptabiliser, pendant le cycle de Ns fenêtres, les messages reçus des étiquettes électroniques pour déterminer le nombre ni d'identifications, le nombre $n_v$ de fenêtres ou cases vides et le nombre $n_c$ de collisions (rectangle 64),

(c) arrêter le procédé si $n_c = 0$ (rectangle 68) ou passer à l'étape (d) si $n_c \neq 0$,

(d) calculer un nombre Ns1 de fenêtres d'émission pour le cycle suivant en fonction des valeurs de Ns, $n_i$, $n_v$ et $n_c$ (rectangle 70),

(e) retourner à l'étape (a) avec Ns = Ns1 calculé (rectangle 62).

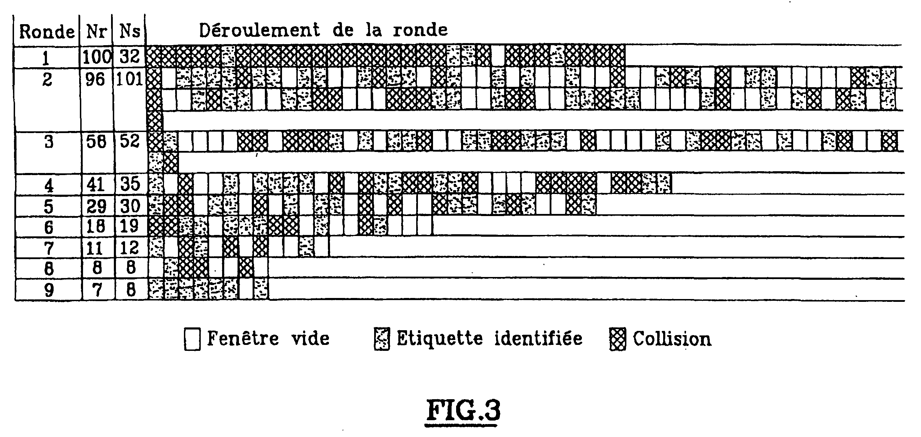

La figure 3 illustre les étapes du procédé selon l'invention dans le cas où N=100 et Ns=32.

Le premier cycle ou la première ronde comprend trente-deux fenêtres (étape (a)) et eu égard au fait que N=100 est beaucoup plus grand que Ns=32, le nombre de collisions sera par exemple $n_c$=27, avec $n_i$=4 identifications et une fenêtre vide ($n_v$=1), ce qui est comptabilisé par l'étape (b).

Comme $n_c \neq 0$, il y a passage à l'étape (d) qui consiste à calculer une valeur de Ns1 en fonction de Ns=32, $n_c$=27, $n_i$=4 et $n_v$=1, ce qui donne Ns=101 pour Nr=96 étiquettes électroniques restant à identifier.

Ce nombre Ns=101 est indiqué aux étiquettes électroniques restant à identifier (étape (a)), ces dernières choisissant aléatoirement d'émettre dans une fenêtre parmi 101.

Ceci conduit à une deuxième étape (b) dans laquelle on comptabilise ni=38 identifications, $n_c$=22 collisions et $n_v$=11 fenêtres vides.

Le calcul de la deuxième étape (d) conduit à Ns=52, nombre qui est indiqué aux étiquettes électroniques restant à identifier (3ème étape (a)), ces dernières choisissant aléatoirement d'émettre dans une fenêtre parmi 52.

La comptabilisation de la troisième étape (b) détermine les valeurs de $n_i$=17, $n_c$=15 et $n_v$=20 qui permettent de calculer un nouvel Ns=35 (3ème étape (d)) pour un quatrième cycle ou ronde.

Ce quatrième cycle permet d'identifier ni=12 étiquettes et de comptabiliser $n_c$=12 collisions et $n_v$=11 fenêtres vides, ce qui donne un nouvel Ns=30 pour le cinquième cycle.

Ce cinquième cycle conduit à $n_i$=11, $n_c$=8 et $n_v$=11, soit un nouvel Ns=19 pour le sixième cycle.

Ce sixième cycle conduit à $n_i$=7, $n_c$=5 et $n_v$=7, soit un nouvel Ns=12 pour le septième cycle.

Ce septième cycle conduit à $n_i$=3, $n_c$=3 et $n_v$=6, soit un nouvel Ns=8 pour le huitième cycle.

Ce huitième cycle conduit à $n_i$=1, $n_c$=3 et $n_v$=4, soit un nouvel Ns=8 pour le neuvième cycle.

Ce neuvième cycle conduit à $n_i$=7, $n_c$=0 et $n_v$=1.

Comme il n'y a pas de collision, le procédé passe à l'étape (c) de fin du processus (rectangle 68).

Les étapes du procédé qui viennent d'être décrites correspondent à un fonctionnement particulier des étiquettes électroniques dont les étapes suivantes consistent à :

(m) réceptionner le nombre Ns de fenêtres à chaque cycle ou ronde,

(n) choisir aléatoirement une fenêtre d'émission parmi Ns,

(o) émettre un message pendant la durée de la fenêtre choisie,

(p) attendre un message en provenance du dispositif d'interrogation/lecture/enregistrement,

(q) réceptionner l'accusé-réception du message émis du dispositif d'interrogation/lecture/enregistrement en l'absence de collision,

(r) retourner à l'étape (m) en cas de défaut d'accusé-réception, c'est-à-dire en cas de collision.

Les étapes (a) à (e) et (m) à (r) qui viennent d'être décrites peuvent présenter des variantes conformément à l'invention.

Les nombres Ns et N peuvent être tels que le premier cycle ne permet pas d'identifier une seule étiquette électronique, par exemple Ns1=8 pour N=100, ce qui conduit à $n_c$=8 collisions et donc une impossibilité de calculer Ns pour le second cycle.

L'invention propose alors de choisir les valeurs Ns pour le second cycle comme un multiple entier de Ns1, par exemple Ns=4Ns1=32.

Le nombre Ns a été défini comme déterminant le nombre de fenêtres d'émission dans un cycle ou ronde, chaque début de fenêtre correspondant à une durée aléatoire comptée à partir du début du cycle.

Dans l'exemple décrit en relation avec la figure 3, on a supposé que cette durée aléatoire était comptée en nombre de fenêtres, ce qui signifie que les étiquettes électroniques émettent au début de la fenêtre choisie aléatoirement. Ce fonctionnement conduit à une procédure d'identification de durée égale au moins à Ns.d si d est la durée fixe d'une fenêtre. Cette durée totale peut être réduite si l'on tient compte que l'on peut abréger la durée des fenêtres vides ou avec collisions en passant à la fenêtre suivante dès leur détection.

A cet effet, le dispositif d'interrogation peut être prévu pour émettre un signal d'arrêt à toutes les étiquettes dès qu'il est en réception d'au moins une étiquette électronique et pour émettre un signal de passer à la fenêtre suivante dès la fin d'une identification d'une étiquette ou dès qu'il a détecté une collision ou fenêtre vide.

La détermination de Ns est réalisée en estimant d'abord le nombre Np d'étiquettes électroniques présentes lors de la ronde, cette estimation pouvant être faite suivant différentes méthodes. Cette valeur estimée Np permet de calculer le nombre Nr des étiquettes électroniques qui restent à identifier par la formule Nr = Np - $n_i$.

Cette détermination de Ns pour un nouveau cycle est différente selon que le procédé est mis en oeuvre par un choix aléatoire parmi Ns fenêtres ou créneaux correspondant à un fonctionnement dit "en créneaux" ou par un choix aléatoire de Ns durées à compter d'une origine correspondant à un fonctionnement dit "à attente aléatoire".

Dans le premier cas, appelé fonctionnement en créneaux, le nombre Np est déterminé, par exemple, par la méthode des proportions ou celle de la distance.

Selon la méthode des proportions, le nombre Np est le plus grand de deux nombres qui sont ($2n_c$ + $n_i$) et N', $n_c$ étant le nombre de collisions, $n_i$ étant le nombre d'étiquettes identifiées, et N' étant donné par l'une des formules suivantes :

$$N' = n_i(Ns-1)/n_v \qquad \text{si } n_i \neq 0 \text{ et } n_v \neq 0$$

ou

$$N' = (Ns-1)/n_v \text{ si } n_i = 0 \text{ et } n_v \neq 0$$

ou

$$N' = n_i(N_s-1) \qquad \text{si } n_i \neq 0 \text{ et } n_v = 0$$

ou

$$N' = k.Ns$$

dans les autres cas,

- $n_v$ étant le nombre de créneaux vides,
- k étant une constante fixée a priori, par exemple k=4 comme indiqué ci-dessus.

Selon la méthode de la distance, si $n_i=n_v=0$, on prend $Np=k.Ns$. Sinon, Np est la valeur supérieure ou égale à $(2n_c + n_i)$ qui minimise la fonction de distance qui a été choisie.

Parmi les fonctions de distance connues, il y a la distance de Manhattan définie par :

$$d(x) = |xA^{x-1}-n_i| + |NsA^x-n_v|.$$

Il y a la distance bidimensionnelle définie par :

$$d'(x) = (xA^{x-1}-n_i)^2 + (NsA^x-n_v)^2.$$

Il y a la distance tridimensionnelle définie par :

$$d''(x) = (xA^{x-1}-n_i)^2 + (NsA^x-n_v)^2$$

$$+ (xA^{x-1} + NsA^x-n_i-n_v)^2$$

avec $A = (Ns-1)/Ns$.

Ces fonctions de distance n'ont pas de minimum si $n_i=n_v=0$ et tendent vers zéro quand Np tend vers l'infini. Dans ce cas, comme indiqué ci-dessus, Np sera pris égal à k.Ns.

Np étant déterminé comme indiqué ci-dessus, la valeur de Ns du nouveau cycle sera celle qui maximise la fonction :

$$r(Ns) = [I(Nr,Ns)]/[Lv.V(Nr,Ns)+Li.I(Nr,Ns)+Lc.C(Nr,Ns)] \qquad (1)$$

dans laquelle :

- I(Nr, Ns) est le nombre moyen d'étiquettes identifiées avec Nr étiquettes et un cycle de Ns fenêtres,
- V(Nr, Ns) est le nombre moyen de fenêtres vides,
- C(Nr, Ns) est le nombre moyen de collisions,
- Lv est la durée moyenne d'une fenêtre vide jusqu'à l'intervention du dispositif d'interrogation, comme indiqué ci-dessus,
- Li est la durée d'une fenêtre d'identification, et
- Lc est la durée moyenne d'une collision jusqu'à l'intervention du dispositif d'interrogation.

Dans le deuxième cas, appelé fonctionnement à attente aléatoire, l'invention sera décrite dans son application à un fonctionnement selon lequel les étiquettes électroniques émettent des messages d'identification à des instants aléatoires à compter du début d'une fenêtre choisie aléatoirement parmi Ns fenêtres. Ainsi, l'étiquette électronique génère aléatoirement un décalage temporel ainsi qu'un numéro de créneau parmi Ns créneaux, le décalage temporel étant mesuré par rapport au début du créneau choisi.

Dans ce cas, les fonctions définies précédemment pour un fonctionnement en créneaux peuvent être utilisées à condition de les adapter pour tenir compte de paramètres particuliers qui sont :

- T pour la taille du message en nombre de bits,
- $\delta$ pour la valeur maximale du décalage aléatoire en nombre de bits, cette valeur étant inférieure à la taille T du message,
- $\lambda$ pour le temps moyen en bits qui est nécessaire entre la détection d'émission du dispositif d'interrogation/lecture/enregistrement et l'envoi du message d'arrêt d'émission indiqué ci-dessus ; ce temps moyen $\lambda$ peut être pris égal à T si le dispositif n'a pas la possibilité d'envoyer le message d'arrêt d'émission.

Le nombre V' de créneaux vides exprimé en nombre de bits, le nombre C' de collisions exprimé en nombre de bits et I' le nombre d'étiquettes identifiées sont alors estimés par :

$$V'(Np, Ns) = \delta.Ns(\delta Ns-\lambda)^{Np}/(\delta Ns)^{Np} + (T-\delta)Ns$$

$$I'(Np, Ns) = Nr(\delta Ns-2\lambda)^{Np-1}/(\delta Ns)^{Np-1}$$

$$C'(Np, Ns) = T.Ns-\lambda I'(Np, Ns)-V'(Np, Ns).$$

La valeur de Np est alors estimée par l'une des fonctions de distance telles que :

- la distance de Manhattan :

$$d(x) = |I'(x, Ns)-n_i| + |V'(x, Ns)-n'_v|$$

- la distance bidimensionnelle :

$$d'(x) = (I'(x, Ns)-n_i)^2 + (V'(x, Ns)-n'_v)^2$$

- la distance tridimensionnelle :

$$d''(x) = (I'(x, Ns)-n_i)^2 + (V'(x, Ns)-n'_v)^2$$
$$+ (C'(x, Ns)-n'_c)^2.$$

Pour la méthode des proportions, la valeur N' est donnée par :

$$N' = (n_i.B)/[n_v-(T-\delta)Ns] \text{ si } n_i \neq 0 \text{ et } n'_v \neq (T-\delta)Ns$$

ou

$$N' = B/[n_v-(T-\delta)Ns] \text{ si } n_i = 0 \text{ et } n'_v \neq (T-\delta)Ns$$

ou

$$N' = kNs$$

dans les autres cas,
alors $Np = max(2n_c + n_i, N')$,
avec $B = \delta Ns-3\lambda/2$,

- $n_i$ le nombre d'étiquettes identifiées,
- $n'_v$ le nombre de bits pendant lesquels il n'y a pas émission (vides),
- $n_c$ le nombre de collisions observées,
- $n'_c$ le nombre de bits en collision.

Dans le deuxième cas qui vient d'être décrit, il est possible de réduire le nombre de collisions en arrêtant le décomptage des durées aléatoires dans les étiquettes dès la réception d'un message d'une étiquette et en le reprenant après l'identification de l'étiquette concernée.
Bien que le deuxième cas ait été décrit dans son application à un fonctionnement particulier, l'invention s'applique à un fonctionnement selon lequel les attentes aléatoires des étiquettes électroniques avant émission des messages d'identification sont mesurées à compter du début de la ronde.
Ensuite, la valeur de Ns est déterminée par la formule (1) comme dans le premier cas en utilisant :

$$Nr = Np - n_i.$$

## Revendications

**1.** Procédé d'identification d'étiquettes électroniques apposées (10) sur des produits à l'aide d'un dispositif électronique d'interrogation/lecture/enregistrement (40), les étiquettes électroniques (10) et le dispositif électronique (40) étant capables chacun de recevoir et d'émettre des messages, le procédé comprenant, dans le dispositif électronique (40), les étapes suivantes consistant à :

(a) indiquer aux étiquettes électroniques le nombre Ns de fenêtres de durée d'émission consécutives d'un premier cycle ou ronde (62),

(b) comptabiliser, pendant le cycle de Ns fenêtres, les messages reçus des étiquettes électroniques pour déterminer le nombre ni d'identifications le nombre $n_v$ de fenêtres ou cases vides et le nombre $n_c$ de collisions par des étiquettes électroniques qui répondent simultanément (64),

(c) arrêter le procédé si $n_c = 0$ (68), ou passer à l'étape d si $n_c \neq 0$,

(d) calculer un nombre Ns1 de fenêtres d'émission pour le cycle suivant en fonction des valeurs de Ns, $n_i$, $n_v$ et $n_c$ (70),

(e) retourner à l'étape a avec Ns = Ns1 calculé (62),

**caractérisé en ce que** le calcul du nombre Ns pour le cycle suivant est réalisé en :

- estimant le nombre Nr d'étiquettes restant à identifier,
- choisissant la valeur de Ns qui maximise la fonction :

$$r(Ns)=[I(Nr,Ns)]/[Lv.V(Nr,Ns)+Li.I(Nr,Ns)+L$$

$$c.C(Nr,Ns)]$$

dans laquelle :

- I(Nr,Ns) est le nombre moyen d'étiquettes identifiées avec Nr étiquettes et Ns fenêtres,
- V(Nr,Ns) est le nombre moyen de fenêtres vides,
- C(Nr,Ns) est le nombre moyen de collisions,
- Lv est la durée moyenne d'une fenêtre vide jusqu'à l'intervention du dispositif d'interrogation, comme indiqué ci-dessus,
- Li est la durée d'une fenêtre d'identification, et
- Lc est la durée moyenne d'une collision jusqu'à l'intervention du dispositif d'interrogation.

**2.** Procédé selon la revendication 1, **caractérisé en ce qu'**il comprend, en outre, dans chaque étiquette électronique, les étapes suivantes :

(m) réceptionner le nombre Ns de fenêtres à chaque cycle ou ronde,

(n) choisir aléatoirement une fenêtre d'émission parmi Ns,

(o) émettre un message pendant la durée de la fenêtre choisie,

(p) attendre un message en provenance du dispositif d'interrogation,

(q) réceptionner l'accusé-réception du message émis du dispositif d'interrogation en l'absence de collision,

(r) retourner à l'étape (m) en cas de défaut d'accusé-réception, c'est-à-dire en cas de collision.

**3.** Procédé selon l'une des revendications 1 ou 2, **caractérisé en ce que**, dans le cas où $n_i = n_v = 0$, l'étape (d) consiste à calculer un nombre Ns1 de fenêtres d'émission pour le cycle suivant qui est un multiple du nombre Ns du cycle qui vient de se terminer.

**4.** Procédé selon la revendication 1, **caractérisé en ce que** le nombre Nr est égal à (Np - $n_i$), Np étant donné par le plus grand des deux nombres ($2n_c+n_i$) et N', avec :

$$N' = n_i(Ns-1)/n_v \qquad \text{si } n_i \neq 0 \text{ et } n_v \neq 0$$

ou

$$N' = (Ns-1)/n_v \text{ si } n_i = 0 \text{ et } n_v \neq 0$$

ou

$$N' = n_i(Ns-1) \qquad \text{si } n_i \neq 0 \text{ et } n_v = 0$$

ou

$$N' = k.Ns$$

dans les autres cas,

- $n_v$ étant le nombre de créneaux vides,
- k étant une constante fixée à priori.

**5.** Procédé selon la revendication 1, **caractérisé en ce que** le nombre Nr est égal à (Np - $n_i$), le nombre Np étant la valeur supérieure ou légale à $2n_c$ qui minimise la fonction de distance de Manhattan définie par :

$$d(x) = |xA^{x-1} - n_i| + |NsA^x - n_v|$$

avec A = (Ns-1)/Ns

**6.** Procédé selon la revendication 5, **caractérisé en ce que** le nombre Nr est égal à (Np - $n_i$), le nombre Np étant la valeur supérieure ou égale à $2n_c$ qui minimise la fonction de distance bidimensionnelle définie par : $d'(x) = (xA^{x-1} - n_i)^2 + (NsA^x - n_v)^2$
avec A = (Ns-1)/Ns

**7.** Procédé selon la revendication 1, **caractérisé en ce que** le nombre Nr est égal à (Np - $n_i$), le nombre Np étant la valeur supérieure ou égale à $2n_c$ qui minimise la fonction de distance tridimensionnelle définie par :

$$d''(x) = (xA^{x-1} - n_i)^2 + (NsA^x - n_v)^2$$

$$+ (xA^{x-1} + NsA^x - n_i - n_v)^2$$

avec A = (Ns-1)/Ns

**8.** Procédé selon la revendication 1, **caractérisé en ce que** le nombre Nr est égal à (Np - $n_i$), le nombre Np étant pris égal à kNs si $n_i = n_v = 0$,
k étant un nombre entier.

**9.** Procédé selon la revendication 1, dans son application à des étiquettes émettant des messages d'identification à des instants aléatoires à compter du début d'une fenêtre choisie aléatoirement parmi Ns fenêtres, **caractérisé en ce que** le nombre Nr est égal à (Np - $N_i$), le nombre Np étant donné par le plus grand des deux nombres ($2n_c + n_i$) et N' avec :

$$N' = (n_i.B)/[n'_v - (T-\delta)Ns] \text{ si } n_i \neq 0 \text{ et } n'_v \neq (T-\delta)Ns$$

ou

$$N' = B/[n'_v-(T-\delta)Ns] \text{ si } n_i=0 \text{ et } n'_v(T-\delta)Ns$$

ou

$$N' = kNs$$

dans les autres cas,
alors

$$Np = \max(2n_c + n_i, N'),$$

avec

$$B = \delta Ns-3\lambda/2,$$

- ni le nombre d'étiquettes identifiées,
- $n'_v$ le nombre de bits pendant lesquels il n'y a pas d'émission (vides),
- $n_c$ le nombre de collisions observées,
- T la taille du message en nombre de bits,
- $\delta$ la valeur maximale du décalage aléatoire en nombre de bits, cette valeur étant inférieure à la taille T du message,
- $\lambda$ le temps moyen en bits qui est nécessaire entre la détection d'émission du dispositif d'interrogation/lecture/enregistrement et l'envoi du message d'arrêt d'émission indiqué ci-dessus.

**10.** Procédé selon la revendication 1, dans son application à des étiquettes émettant des messages d'identification à des instants aléatoires à compter du début d'une fenêtre choisie aléatoirement parmi Ns fenêtres, **caractérisé en ce que** le nombre Nr est égal à (Np - $N_i$), la valeur de Np étant estimée par la fonction de distance de Manhattan définie par :

$$d(x) = |I'(x,Ns)-n_i| + |V'(x,Ns)-n'_v|$$

avec :

$$V'(Np, Ns) = \delta.Ns(\delta Ns-\lambda)^{Np}/(\delta Ns)^{Np} + (T-\delta)Ns$$

$$I'(Np, Ns) = Np(\delta Ns-2\lambda)^{Np-1}/(\delta Ns)^{Np-1}$$

$$C'(Np, Ns) = T.Ns-\lambda I'(Np, Ns)-V'(Np, Ns)$$

- T la taille du message en nombre de bits,
- $\delta$ la valeur maximale du décalage aléatoire en nombre de bits, cette valeur étant inférieure à la taille T du message,
- $\lambda$ le temps moyen en bits qui est nécessaire entre la détection d'émission du dispositif d'interrogation et l'envoi du message d'arrêt d'émission indiqué ci-dessus.

**11.** Procédé selon la revendication 1, dans son application à des étiquettes émettant des messages d'identification à des instants aléatoires à compter du début d'une fenêtre choisie aléatoirement parmi Ns fenêtres, **caractérisé en ce que** le nombre Nr est égal à (Np - $n_i$), la valeur de Np étant estimée par la fonction de distance bidimensionnelle définie par :

$$d'(x) = (I'(x, Ns)-n_i)^2 + (V'(x, Ns)-n'_v)^2$$

avec :

$$V'(Np, Ns) = \delta.Ns(\delta Ns-\lambda)^{Np}/(\delta Ns)^{Np} + (T-\delta)Ns$$

$$I'(Np, Ns) = Nr(\delta Ns-2\lambda)^{Np-1}/(\delta Ns)^{Np-1}$$

- T la taille du message en nombre de bits,
- $\delta$ la valeur maximale du décalage aléatoire en nombre de bits, cette valeur étant inférieure à la taille T du message,
- $\lambda$ le temps moyen en bits qui est nécessaire entre la détection d'émission du dispositif d'interrogation et l'envoi du message d'arrêt d'émission indiqué ci-dessus.

**12.** Procédé selon la revendication 1, dans son application à des étiquettes émettant des messages d'identification à des instants aléatoires à compter du début, d'une fenêtre choisie aléatoirement parmi Ns fenêtres, **caractérisé en ce que** le nombre Nr est égal à $(Np - n_i)$, la valeur de Np étant estimée par la fonction de distance tridimensionnelle définie par :

$$d''(x) = (I'(x, Ns)-n_i)^2 + (V'(x, Ns)-n_v)^2$$

$$+ (C'(x, Ns)-n'_c)^2.$$

avec :

$$V'(Np, Ns) = \delta.Ns(\delta Ns-\lambda)^{Np}/(\delta Ns)^{Np} + (T-\delta)Ns$$

$$I'(Np, Ns) = Np(\delta Ns-2\lambda)^{Np-1}/(\delta Ns)^{Np-1}$$

$$C'(Np, Ns) = T.Ns-\lambda I'(Np, Ns)-V'(Np, Ns)$$

- T la taille du message en nombre de bits,
- $\delta$ la valeur maximale du décalage aléatoire en nombre de bits, cette valeur étant inférieure à la taille T du message,
- $\lambda$ le temps moyen en bits qui est nécessaire entre la détection d'émission du dispositif d'interrogation et l'envoi du message d'arrêt d'émission indiqué ci-dessus,
- $n'_c$ le nombre de bits en collision.

**13.** Procédé selon l'une quelconque des revendications précédentes 1 à 12, **caractérisé en ce qu'**il comprend, en outre, lors de chaque fenêtre d'émission, l'étape supplémentaire suivante consistant à :

- émettre un signal d'arrêt d'émission à toutes les étiquettes électroniques dès réception d'un message en provenance d'au moins une étiquette électronique.

**14.** Procédé selon l'une quelconque des revendications 1 à 13, **caractérisé en ce qu'**il comprend, en outre, lors de chaque fenêtre d'émission, l'étape suivante consistant à :

- émettre un signal de passage à la fenêtre suivante dès la fin d'une identification d'une étiquette électronique.

**15.** Procédé selon l'une quelconque des revendications 1 à 13, **caractérisé en ce qu'**il comprend, en outre, lors de chaque fenêtre d'émission, l'étape suivante consistant à :

-   émettre un signal de passage à la fenêtre suivante dès la détection d'une collision ou d'une fenêtre vide.

**Patentansprüche**

**1.** Verfahren zur Erkennung von elektronischen Schildern (10), welche Produkten mit Hilfe einer elektronischen Befragungs-/Ablesungs-/Speicherungsvorrichtung (40) angebracht werden, wobei die elektronischen Schilder (10) und die elektronische Vorrichtung (40) jeweils in der Lage sind, Meldungen zu empfangen und auszusenden, wobei das Verfahren in der elektronischen Vorrichtung (40) folgende Schritte umfasst, welche darin bestehen, :

(a) den elektronischen Schildern die Anzahl Ns von aufeinanderfolgenden Sendedauerfenstern eines ersten Zyklus oder einer ersten Runde (62) anzugeben,
(b) die Anzahl der während eines Zyklus von Ns Fenstern von den elektronischen Schildern empfangenen Meldungen zu erfassen, um die Anzahl $n_i$ der Erkennungen, die Anzahl $n_v$ der Fenster oder leeren Felder und die Anzahl $n_c$ der Zusammenstöße durch gleichzeitig antwortende elektronische Schilder (64) zu erfassen,
(c) das Verfahren anzuhalten, wenn $n_c=0$ (68) oder zum nächsten Schritt d weiterzugehen, wenn $n_c \neq 0$,
(d) die Anzahl Ns1 von Aussendefenstern für den nächsten Zyklus je nach den Werten Ns, $n_i$, $n_v$ und $n_c$ (70) zu berechnen,
(e) zu Schritt a zurückzugehen, wenn Ns=Ns1 berechnet,

**dadurch gekennzeichnet, dass** die Berechnung der Zahl Ns für den nächsten Zyklus dadurch erfolgt, dass

-   die Anzahl Nr der noch zu erkennenden Schilder geschätzt wird,
-   der Wert für Ns gewählt wird, welcher die Funktion

$$r(Ns)=[I(Nr,Ns)]/[Lv.V(Nr,Ns)+Li.I(Nr,Ns)+Lc.C(Nr,Ns)]$$

maximisiert, in welcher
-   I(Nr,Ns) die durchschnittliche Anzahl von mit Nr Schildern und Ns Fenstern erkannten Schildern ist,
-   V(Nr,Ns) die durchschnittliche Anzahl von leeren Fenstern ist,
-   C(Nr,Ns) die durchschnittliche Anzahl von Zusammenstößen ist,
-   Lv die durchschnittliche Dauer eines leeren Fensters bis zum Einsatz der Befragungsvorrichtung, wie obenstehend angegeben, ist,
-   Li die Dauer eines Erkennungsfensters ist, und
-   Lc die durchschnittliche Dauer eines Zusammenstoßes bis zum Einsatz der Befragungsvorrichtung ist.

**2.** Verfahren nach Anspruch 1, **dadurch gekennzeichnet, dass** es ferner in jedem elektronischen Schild die folgenden Schritte umfasst:

(m) die Anzahl Ns von Fenstern bei jedem Zyklus oder jeder Runde zu empfangen,
(n) unter Ns zufallsbedingt ein Aussendefenster zu wählen,
(o) während der Dauer des gewählten Fensters eine Meldung auszusenden,
(p) eine Meldung von der Befragungsvorrichtung zu erwarten,
(q) die von der Befragungsvorrichtung bei Abwesenheit von einem Zusammenstoß gesendeten Empfangsbestätigung der Meldung zu empfangen,
(r) zu Schritt (m) zurückzukehren, wenn keine Empfangsbestätigung vorliegt, d.h. im Falle eines Zusammenstoßes.

**3.** Verfahren nach einem der Ansprüche 1 oder 2, **dadurch gekennzeichnet, dass** wenn $n_i=n_v=0$, der Schritt (d) darin besteht, eine Anzahl Ns1 von Aussendefenstern für den nächsten Zyklus zu berechnen, welche ein Vielfaches der Anzahl Ns des gerade beendeten Zyklus ist.

**4.** Verfahren nach Anspruch 1, **dadurch gekennzeichnet, dass** die Anzahl Nr gleich ($Np-n_i$) ist, wobei Np durch die Größere der zwei Zahlen ($2n_c+n_i$) und N' ist, mit

$$N'=n_i(Ns-1)/n_v, \text{ wenn } n_i\neq0 \text{ und } n_v\neq0$$

oder

$$N'=(Ns-1)/n_v, \text{ wenn } n_i=0 \text{ und } n_v\neq0$$

oder

$$N'= n_i(Ns-1), \text{ wenn } n_i\neq0 \text{ und } n_v=0$$

oder

$$N'=k.Ns \text{ in den anderen Fällen,}$$

wobei $n_v$ die Anzahl der leeren Felder ist,
wobei k eine vorbestimmte Konstante ist.

5. Verfahren nach Anspruch 1, **dadurch gekennzeichnet, dass** die Anzahl Nr gleich (Np-$n_i$) ist, wobei Np der Wert größer als oder gleich $2n_c$ ist, welcher die Manhattan Entfernungsfunktion, welche durch:

$$d\,(x) = |xA^{x-1}-n_i| + |NsA^x-n_v|$$

mit A=(Ns-1)/Ns
bestimmt ist, minimisiert.

6. Verfahren nach Anspruch 5, **dadurch gekennzeichnet, dass** die Anzahl Nr gleich (Np-$n_i$) ist, wobei Np der Wert größer als oder gleich $2n_c$ ist, welcher die Bidimensionale Entfernungs-Funktion, welche durch:

$$d'\,(x)=(xA^{x-1}-n_i)^2 +(NsA^x-n_v)^2$$

mit A=(Ns-1)/Ns
bestimmt ist, minimisiert.

7. Verfahren nach Anspruch 1, **dadurch gekennzeichnet, dass** die Anzahl Nr gleich (Np-$n_i$) ist, wobei die Anzahl Np der Wert größer als oder gleich $2n_c$ ist, welcher die Tridimensionale Entfernungs-Funktion, welche durch

$$d''\,(x) = (xA^{x-1}-n_i)^2+(NsA^x-n_v)^2+(xA^{x-1}+NsA^x-n_i-n_v)^2$$

mit A=(Ns-1)/Ns
bestimmt ist, minimisiert.

8. Verfahren nach Anspruch 1, **dadurch gekennzeichnet, dass** die Anzahl Nr gleich (Np-$n_i$) ist, wobei die Anzahl Np als gleich kNs gewählt ist, wenn $n_i=n_v=0$,
wobei k eine ganze Zahl ist.

9. Verfahren nach Anspruch 1, in seiner Anwendung auf Schilder, welche Erkennungsmeldungen zu zufallsbedingten Momenten von dem Anfang eines zufällig unter Ns Fenstern gewählten Fenster an aussenden, **dadurch gekennzeichnet, dass** die Zahl Nr gleich (Np-$N_i$) ist, wobei die Zahl Np durch die Größere der zwei Zahlen ($2n_c+n_i$) und N' gegeben ist, mit:

$$N'=(n_i.B)/[n'_v-(T-\delta)Ns], \text{ wenn } n_i\neq0 \text{ und } n'_v\neq(T-\delta)Ns$$

oder $N'-B/[n'_v-(T-\delta)Ns]$, wenn $n_i=0$ und $n/_v(T-\delta)Ns$
oder $N'=kNs$ in den anderen Fällen,
also $Np=max(2n_c+n_i, N')$,
mit $B=\delta Ns-3\lambda/2$,

- $n_i$ die Anzahl der erkannten Schilder,
- $n'_v$ die Anzahl der Bits während derer keine Aussendung erfolgt ist (leer),
- $n_c$ die Anzahl der beobachteten Zusammenstöße,
- $T$ der Umfang der Meldung in Anzahl von Bits ausgedrückt,
- $\delta$ der Höchstwert der zufallsbedingten Diskrepanz in Anzahl von Bits ausgedrückt, wobei dieser Wert kleiner als der Umfang $T$ der Meldung ist,
- $\lambda$ die durchschnittliche Zeit in Bits ausgedrückt, welche zwischen der Entdeckung der Aussendung der Befragungs-/Ablesungs- Speicherungsvorrichtung und der Sendung der obenstehend angegebenen Sendeschlussmeldung benötigt wird.

10. Verfahren nach Anspruch 1, in seiner Anwendung auf Schilder, welche Erkennungsmeldungen zu zufallsbedingten Momenten von dem Anfang eines zufällig unter Ns Fenstern gewählten Fenster an aussenden, **dadurch gekennzeichnet, dass** die Zahl Nr gleich $(Np-N_i)$ ist, wobei der Wert von Np durch die Manhattan Entfernungs-Funktion, welche durch Folgendes bestimmt ist, geschätzt wird:

$$d(x)=|I'(x,Ns)-n_i|+|V'(x,Ns)-n'_v|$$

mit

$$V'(Np, Ns)=\delta.Ns(\delta Ns-\lambda)^{Np}/(\delta Ns)^{Np}+(T-\delta)Ns$$

$$I'(Np, Ns)= Np(\delta Ns-2\lambda)^{Np-1}/(\delta Ns)^{Np-1}$$

$$C'(Np, Ns)=T.Ns-\lambda I'(Np, Ns)-V'(Np, Ns)$$

- $T$ der Umfang der Meldung in Anzahl von Bits ausgedrückt
- $\delta$ der Höchstwert der zufallsbedingten Diskrepanz in Anzahl von Bits ausgedrückt, wobei dieser Wert kleiner als der Umfang $T$ der Meldung ist,
- $\lambda$ die durchschnittliche Zeit in Bits ausgedrückt, welche zwischen der Entdeckung der Aussendung der Befragungsvorrichtung und der Sendung der obenstehend angegebenen Sendeschlussmeldung benötigt wird.

11. Verfahren nach Anspruch 1, in seiner Anwendung auf Schilder, welche Erkennungsmeldungen zu zufallsbedingten Momenten von dem Anfang eines zufällig unter Ns Fenstern gewählten Fenster an aussenden, **dadurch gekennzeichnet, dass** die Zahl Nr gleich $(Np-N_i)$ ist, wobei der Wert von Np durch die Bidimensionale Entfernungs-Funktion, welche durch Folgendes bestimmt ist, geschätzt wird:

$$d'(x)=(I'(x,Ns)-n_i)^2+(V'(x,Ns)-n'_v)^2$$

mit

$$V'(Np, Ns)=\delta.Ns(\delta Ns-\lambda)^{Np}/(\delta Ns)^{Np}+(T-\delta)Ns$$

$$I'(Np, Ns) = Np (\delta Ns-2\lambda)^{Np-1}/(\delta Ns)^{Np-1}$$

- T der Umfang der Meldung in Anzahl von Bits ausgedrückt
- $\delta$ der Höchstwert der zufallsbedingten Diskrepanz in Anzahl von Bits ausgedrückt, wobei dieser Wert kleiner als der Umfang T der Meldung ist,
- $\lambda$ die durchschnittliche Zeit in Bits ausgedrückt, welche zwischen der Entdeckung der Aussendung der Befragungsvorrichtung und der Sendung der obenstehend angegebenen Sendeschlussmeldung benötigt wird.

**12.** Verfahren nach Anspruch 1, in seiner Anwendung auf Schilder, welche Erkennungsmeldungen zu zufallsbedingten Momenten von dem Anfang eines zufällig unter Ns Fenstern gewählten Fenster an aussenden, **dadurch gekennzeichnet, dass** die Zahl Nr gleich ($Np-N_i$) ist, wobei der Wert von Np durch die Tridimensionale Entfernungs-Funktion, welche durch Folgendes bestimmt ist, geschätzt wird:

$$d''(x)=(I'(x,\ Ns)-n_i)^2+(V'(x,\ Ns)-n_v)^2$$

$$+ (C'(x,\ Ns)-n'_c)^2$$

mit

$$V'(Np,\ Ns) =\delta.Ns(\delta Ns-\lambda)^{Np}/(\delta Ns)^{Np}+(T-\delta)Ns$$

$$I'(Np,\ Ns)= Np(\delta Ns-2\lambda)^{Np-1}/(\delta Ns)^{Np-1}$$

$$C'(Np,\ Ns)=T.Ns-\lambda I'(Np,\ Ns)-V'\ (Np,\ Ns)$$

- T der Umfang der Meldung in Anzahl von Bits ausgedrückt,
- $\delta$ der Höchstwert der zufallsbedingten Diskrepanz in Anzahl von Bits ausgedrückt, wobei dieser Wert kleiner als der Umfang T der Meldung ist,
- $\lambda$ die durchschnittliche Zeit in Bits ausgedrückt, welche zwischen der Entdeckung der Aussendung der Befragungsvorrichtung und der Sendung der obenstehend angegebenen Sendeschlussmeldung benötigt wird,
- $n'_c$ die Anzahl der Bits in Zusammenstoß.

**13.** Verfahren nach einem der Ansprüche 1 bis 12, **dadurch gekennzeichnet, dass** es ferner bei jedem Sendefenster den folgenden zusätzlichen Schritt umfasst, welcher darin besteht,

- ein Sendeschlusssignal an alle elektronischen Schilder bei dem Empfang einer Meldung von mindestens einem elektronischen Schild auszusenden.

**14.** Verfahren nach einem der Ansprüche 1 bis 13, **dadurch gekennzeichnet, dass** es ferner bei jedem Sendefenster den folgenden Schritt umfasst, welcher darin besteht,

- dem folgenden Fenster ein Durchgangssignal bei Abschluss einer Erkennung eines elektronischen Schildes auszusenden.

**15.** Verfahren nach einem der Ansprüche 1 bis 13, **dadurch gekennzeichnet, dass** es ferner bei jedem Sendefenster den folgenden Schritt umfasst, welcher darin besteht,

- dem folgenden Fenster ein Durchgangssignal bei der Entdeckung eines Zusammenstoßes oder eines leeren Fensters auszusenden.

**Claims**

**1.** Process for identifying electronic labels affixed (10) to products by means of an electronic interrogator/reader/recorder device (40), - the electronic labels (10) and the electronic device (40) each being capable of receiving and transmitting messages, the process including, in the electronic device (40), the following steps consisting in:

(a) indicating to the electronic labels the number Ns of consecutive transmission duration windows of a first cycle or round (62),

(b) counting, during the Ns windows cycle, the messages received from the electronic labels so as to determine the number $n_i$ of identifications, the number $n_v$ of windows or empty boxes and the number $n_c$ of collisions by electronic labels responding simultaneously (64),

(c) stopping the process if $n_c = 0$ (68), or moving on to step d if $n_c \neq 0$,

(d) calculating a number Nsl of transmission windows for the next cycle as a function of the values of Ns, $n_i$, $n_v$ and $n_c$ (70),

(e) returning to step a with Ns = Nsl calculated (62),

**characterised in that** the calculation of the number Ns for the next cycle is made by:

- estimating the number Nr of labels remaining to be identified,
- choosing the value of Ns which maximizes the function:

$$r(Ns)=[I(Nr,Ns)]/[Lv.V(Nr,Ns)+Li.I(Nr,Ns)+Lc.C(Nr,Ns)]$$

in which:

- I(Nr,Ns) is the average number of labels identified with Nr labels and Ns windows,
- V(Nr,Ns) is the average number of empty windows,
- C(Nr,Ns) is the average number of collisions,
- Lv is the average duration of an empty window prior to the intervention of the interrogation device as indicated above,
- Li is the duration of an identification window, and
- Lc is the average duration of a collision prior to the intervention of the interrogation device..

2. Process according to claim 1, **characterised in that** it includes, additionally, in each electronic label, the following steps:

(m) receiving the number Ns of windows at each cycle or round,
(n) randomly choosing a transmission window among Ns,
(o) transmitting a message during the duration of the chosen window,
(p) waiting for a message from the interrogation device,
(q) receiving the acknowledgement of the message sent by the interrogation device in the absence of collision,
(r) returning to step (m) in the event of there being no acknowledgement, in other words in the event of collision.

3. Process according to one of claims 1 or 2, **characterised in that**, in the situation where $n_i = n_v = 0$, step (d) consists in calculating a number Nsl of transmission windows for the next cycle which is a multiple of the number Ns of the cycle which has just ended.

4. Process according to claim 1, **characterised in that** the number Nr is equal to (Np - $n_i$), Np being given by the largest of the two numbers ($2n_c+n_i$) and N', with:

$$N' = n_i (Ns-1)/n, \text{ if } n_i \neq 0 \text{ and } n_v \neq 0$$

or

$$N' = (Ns-1)/n, \text{ if } n_i = 0 \text{ and } n_v \neq 0$$

or

$$N' = n_i (Ns-1) \text{ if } n_i \neq 0 \text{ and } n_v = 0$$

or

$$N' = k.Ns \text{ in the other situations,}$$

- $n_v$ being the number of empty slots,
- $k$ being a previously fixed constant.

5. Process according to claim 1, **characterised in that** the number Nr is equal to $(Np - n_i)$, the number Np being the value greater than or equal to $2n_c$ which minimises the Manhattan distance function defined by:

$$d(x) = |xA^{x-1}-n_i|+|NsA^{x}-n_v|$$

    with $A = (Ns-1)/Ns$

6. Process according to claim 5, **characterised in that** the number Nr is equal to $(Np - n_i)$, the number Np being the value greater than or equal to $2n_c$ which minimises the two-dimensional distance defined by: $d'(x) = (xA^{x-1}-n_i)^2 + (NsA^{x}-n_v)^2$
    with $A = (Ns-1)/Ns$.

7. Process according to claim 1, **characterised in that** the number Nr is equal to $(Np - n_i)$, the number Np being the value greater than or equal to $2n_c$ which minimises the three-dimensional distance function defined by:

$$d''(x) = (xA^{x-1}-n_i)^2 + (NsA^{x}-n_v)^2$$

$$+ (xA^{x-1} + NsA^{x}-n_i-n_v)^2$$

    with $A = (Ns-1)/Ns$.

8. Process according to claim 1 **characterised in that** the number Nr is equal to $(Np - n_i)$, the number Np being taken equal to kNs if $n_i = n_v = 0$,
    $k$ being a whole number.

9. Process according to claim 1, in its application to labels transmitting identification messages at random moments with effect from the start of a window randomly selected among Ns windows, **characterised in that** the number Nr is equal to $(Np - n_i)$, the number Np being given by the largest of the two numbers $(2n_c+n_i)$ and N', with:

$$N' = (n_i.B)/[n'_v-(T-\delta)Ns] \text{ if } n_i \neq 0 \text{ and } n'_v \neq (t-\delta)Ns$$

or

$$N' = B/[n'_v-(T-\delta)Ns] \text{ if } n_i=0 \text{ and } n'_v(T-\delta)Ns$$

or

$$N' = kNs \text{ in the other situations}$$

while

$$Np = \max(2n_c + n_i, N'),$$

with

$$B = \delta Ns - 3\lambda/2,$$

- $n_i$ the number of labels identified,
- $n'_v$ the number of bits during which there is no transmission (voids),
- $n_c$ the number of collisions observed,
- T the size of the message as a number of bits,
- $\delta$ the maximum value of the random interval as a number of bits, this value being lower than the size T of the message,
- $\lambda$ the average bit time which is necessary between the detection of transmission by the interrogator, reader, recorder device and the sending of the transmission stop message specified above.

10. Process according to claim 1, in its application to labels transmitting identification messages at random moments with effect from the start of a window randomly'chosen among Ns windows, **characterised in that** the number Nr is equal to (Np - $n_i$), the value of Np being estimated by the Manhattan distance function defined by:

$$d(x) = |I'(x,Ns) - n_i| + |V'(x,Ns) - n'_v|$$

with:

$$V'(Np,Ns) = \delta.Ns(\delta Ns - \lambda)^{Np}/(\delta Ns)^{Np} + (T-\delta)Ns$$

$$I'(Np,Ns) = Np(\delta Ns - 2\lambda)^{Np-1}/(\delta Ns)^{Np-1}$$

$$C'(Np,Ns) = T.Ns - \lambda I'(Np,Ns) - V'(Np,Ns)$$

- T the size of the message as a number of bits,
- $\delta$ the maximum value of the random interval as a number of bits, this value being lower than the size T of the message,
- $\lambda$ the average bit time which is necessary between the detection of transmission by the interrogator device and the sending of the transmission stop message specified above.

11. Process according to claim 1, in its application to labels transmitting identification messages at random moments with effect from the start of a window randomly selected among Ns windows, **characterised in that** the number Nr is equal to (Np - $n_i$), the value of Np being estimated by the two-dimensional distance function defined by:

$$d'(x) = (I'(x,Ns) - n_i)^2 + (V'(x,Ns) - n'_v)^2$$

with:

$$V'(Np,Ns) = \delta.Ns(\delta Ns - \lambda)^{Np}/(\delta Ns)^{Np} + (T-\delta)Ns|$$

$$I'(Np,Ns) = Nr(\delta Ns - 2\lambda)^{Np-1}/(\delta Ns)^{Np-1}$$

- T the size of the message as a number of bits,
- $\delta$ the maximum value of the random interval as a number of bits, this value being lower than the size T of the message,
- $\lambda$ the average bit time which is necessary between the detection of transmission by the interrogator device and the sending of the transmission stop message specified above.

12. Process according to claim 1, in its application to labels transmitting identification messages at random moments with effect from the start of a window randomly selected among Ns windows, **characterised in that** the number Nr is equal to (Np - $n_i$), the value of Np being estimated by the three-dimensional distance function defined by:

$$d''(x) = (I' (x,Ns)-n_i)^2 + (V'(x,Ns)-n_v)^2$$

$$+ C'((x,Ns)-n'_c)^2$$

with:

$$V'(Np,Ns) = \delta.Ns(\delta Ns-\lambda)^{Np}/(\delta Ns)^{Np} + (T-\delta)Ns$$

$$I'(Np,Ns) = Nr(\delta Ns-2\lambda)^{Np-1}/(\delta Ns)^{Np-1}$$

$$C'(Np,Ns) = T.Ns-\lambda I'(Np,Ns)-V'(Np,Ns)$$

- T the size of the message as a number of bits,
- $\delta$ the maximum value of the random interval as a number of bits, this value being lower than the size T of the message,
- $\lambda$ the average bit time which is necessary between the detection of transmission by the interrogator device and the sending of the transmission stop message specified above,
- $n'_c$ the number of bits in collision.

13. Process according to any one of the previous claims 1 to 12, **characterised in that** it includes, additionally, at each transmission window, the following additional step consisting in:

   - transmitting a transmission stop signal to all the electronic labels as soon as a message.is received from at least one electronic label.

14. Process according to any one of the previous claims 1 to 13, **characterised in that** it includes, additionally, at each transmission window, the following step consisting in:

   - transmitting a signal of transfer to the next window immediately after the end of an identification of an electronic label.

15. Process according to any one of the claims 1 to 13, **characterised in that** it includes, additionally, at each transmission window, the following step consisting in:

   - transmitting a signal of transfer to the next window immediately following the detection of a collision or an empty window.

**FIG.1**

EP 1 232 471 B1

**FIG.2**

| Ronde | Nr | Ns | Déroulement de la ronde |
|-------|-----|-----|-------------------------|
| 1 | 100 | 32 | |
| 2 | 96 | 101 | |
| 3 | 58 | 52 | |
| 4 | 41 | 35 | |
| 5 | 29 | 30 | |
| 6 | 18 | 19 | |
| 7 | 11 | 12 | |
| 8 | 8 | 8 | |
| 9 | 7 | 8 | |

☐ Fenêtre vide    ▨ Etiquette identifiée    ▨ Collision

**FIG.3**

EP 1 232 471 B1